# EUROPÄISCHE PATENTSCHRIFT

(11) **EP 3 615 476 B1**
(45) Veröffentlichungstag und Bekanntmachung des Hinweises auf die Patenterteilung: **01.09.2021**
(21) Anmeldenummer: 18721741.9
(22) Anmeldetag: 27.04.2018
(51) Int. Cl.: C02F 1/44, C02F 1/467, C02F 1/52, C02F 3/28, C02F 9/00, C02F 103/22, C02F 103/32

(54) **VERFAHREN UND VORRICHTUNG ZUR AUFBEREITUNG VON ABFALLPRODUKTEN**
METHOD AND DEVICE FOR TREATING WASTE PRODUCTS
PROCÉDÉ ET DISPOSITIF DE TRAITEMENT DE DÉCHETS

(30) Priorität: 28.04.2017 DE 102017207286
(43) Veröffentlichungstag der Anmeldung: 04.03.2020
(73) Patentinhaber: Fraunhofer-Gesellschaft zur Förderung der angewandten Forschung e.V., 80686 München (DE); Sachsenmilch Leppersdorf GmbH, 01454 Wachau OT Leppersdorf Sachsen (DE); wks Technik GmbH, 01237 Dresden Sachsen (DE)
(72) Erfinder: WUFKA, André, 01259 Dresden (DE); FASSAUER, Burkhardt, 01277 Dresden (DE); MÜLLER, Pascal, 01277 Dresden (DE); WEILE, Frank, 01157 Dresden (DE); MÜNCH, Christiane, 01640 Coswig (DE); GEORGI, Hartmut, 01594 Dösitz (DE)
(74) Vertreter: Rauschenbach, Marion
(86) Internationale Anmeldenummer: PCT/EP2018/060878
(87) Internationale Veröffentlichungsnummer: WO 2018/197671

(56) Entgegenhaltungen:
- WO-A1-2014/110429
- D. CRUTCHIK ET AL: "Struvite crystallization versus amorphous magnesium and calcium phosphate precipitation during the treatment of a saline industrial wastewater", WATER SCIENCE AND TECHNOLOGY, Bd. 64, Nr. 12, 23. August 2011 (2011-08-23), Seite 2460, XP055480429, ISSN: 0273-1223, DOI: 10.2166/wst.2011.836
- IHARA I ET AL: "Electrochemical oxidation of the effluent from anaerobic digestion of dairy manure", BIORESOURCE TECHNOLOGY, ELSEVIER, AMSTERDAM, NL, Bd. 97, Nr. 12, 25. August 2005 (2005-08-25), Seiten 1360-1364, XP027965320, ISSN: 0960-8524 [gefunden am 2006-08-01]

## Beschreibung

Die Erfindung bezieht sich auf die Gebiete der Verfahrenstechnik, Wasserbehandlung-/Wasseraufbereitung und Lebensmittelindustrie und betrifft ein Verfahren zur Aufbereitung von Abfallprodukten, wie es beispielsweise bei der Aufbereitung von niedrigviskosen Abfallprodukten mit organischen Säuren aus der milchverarbeitenden Industrie zum Einsatz kommen kann, und eine Vorrichtung zur Aufbereitung derartiger Abfallprodukte.

In der industriellen Verarbeitung von organischen Rohstoffen hin zu marktfähigen Lebensmitteln fallen oft erhebliche Mengen an Reststoffen und Abfallprodukten an, die in der Regel energie- und kostenaufwändig aufbereitet und entsorgt werden müssen.

Im Falle von stark organisch belasteten Reststoffen, die zusätzlich durch hohe Gehalte an gelösten mineralischen Inhaltsstoffen (ein- und/oder höherwertige Salze) gekennzeichnet sind, stoßen konventionelle Aufbereitungsverfahren, wie aerobe/anaerobe Wasseraufbereitungsverfahren aufgrund dieser komplexen stofflichen Zusammensetzung oft an ihre Einsatzgrenzen. Eine wirtschaftliche Aufbereitung dieser Reststoffe ist bislang aufgrund fehlender verfahrenstechnischer Lösungen nicht möglich. In der Praxis werden diese Abprodukte deshalb oft ohne die Gewinnung der werthaltigen Inhaltsstoffe kostenaufwändig behandelt und anschließend entsorgt.

Bekannt ist aus der DE 10 2006 055 445 A1 ein Verfahren zur MAP Bildung mittels überstöchiometrischer NH₃-Dosierung, bei dem zur Ausfällung aus Trüb-/Filtratwässern von anaeroben Abwässern, Schlämmen oder Biogasreaktoren das Ammoniak aus dem Trübwasser unter Gewinnung von hochkonzentriertem Ammoniak-Wasser extrahiert wird, der ausgefaulte Faulschlamm unter Rücklösung des Struvits und damit Gewinnung einer am Löslichkeitsprodukt liegenden hochkonzentrierten NH₄⁻, Mg²⁺ und PO₄³⁻ Lösung im Gegen-Auf-Strom durchspült wird und die beiden gewonnenen Lösungen unter erheblichem Überschreiten des MAP Löslichkeitsproduktes unter Bewirkung einer Struvitausfällung vermischt werden.

Weiter bekannt ist aus der DE 10 2013 007 076 A1 ein Verfahren und eine Anlage zur Gewinnung von konzentriertem, mineralischen Dünger aus Ausgangsstoffen mit organischem Abfall durch Kristallisation, bei dem die Ausgangsstoffe in einen Reaktor überführt werden, die anaerobe Fermentation in diesem Reaktor durchgeführt wird, nachfolgend eine selektive Anreicherung von während der Fermentation gebildeten Kristalle der anorganischen Verbindung durch Sedimentation im unteren Teil des Reaktors stattfindet und die Kristalle durch den aus dem Reaktor austretenden Teilstrom ausgetragen werden.

Gemäß der US 2012/0261338 A1 sind ein Verfahren und eine Vorrichtung für die Struvit-Rückgewinnung durch Phosphat-Injektion bekannt, bei dem aus Abwasser über eine Fällungsreaktion Struvit in einem Reaktor ausgefällt wird, wobei CO₂ und H₃PO₄ an verschiedenen Stellen des Verfahrens zugegeben werden und die Zugabe über den pH-Wert, den Flüssigkeitsstrom und den Flüssigkeitsdruck kontrolliert wird. Ebenso sind aus der EP 2489641 A1 ein Verfahren und eine Vorrichtung zur Struvit-Rückgewinnung durch CO₂-Zugabe oder aus der EP 2489640 A1 durch Phosphatzugabe bekannt. Weiter ist aus der WO2014110429 ein Verfahren und eine Vorrichtung zur Wasserreinigung und Struvit-Rückgewinnung aus Abwasser bekannt.

Nachteilig bei den bekannten Lösungen ist, dass die Gewinnung der werthaltigen Inhaltsstoffe kostenaufwändig und oft nicht vollständig realisierbar ist.

Aufgabe der vorliegenden Erfindung ist es, ein Verfahren zur Aufbereitung von Abfallprodukten anzugeben, bei dem eine deutlich bessere energetische und stoffliche Aufbereitung und/oder Nutzung der werthaltigen Inhaltstoffe der Abfallprodukte realisiert wird und dies mit einer kontinuierlich und effektiv arbeitenden Vorrichtung realisiert ist.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Aufbereitung von Abfallprodukten, bei dem Abfallprodukte mit einem Gehalt von höchstens 12 g/l an organischen Säuren und Salzgehalten von höchstens 50 g/l zuerst einer anaeroben Vergärung und Fällung zur Erzeugung von Biogas unterzogen werden, wobei ein Teil der dabei entstandenen Flüssigphase mit Feststoffanteilen aus dem Verfahren entfernt wird und der andere Teil der entstandenen Flüssigphase mit Feststoffanteilen mindestens teilweise einer Magnesiumammoniumphosphat-Fällung (MAP-Fällung) unterworfen wird, wobei während der MAP-Fällung mindestens ein Gas und Magnesium, in Form von Ionen oder magnesiumhaltigen Verbindungen, und Phosphorverbindungen und Hydroxidionen in Form von Verbindungen in die Flüssigphase mit Feststoffanteilen zugeführt werden und durch die Gaszuführung eine Schlaufenströmung der Flüssigphase mit Feststoffanteilen während der MAP-Fällung realisiert wird, dann ein Teil der bei der MAP-Fällung entstandenen Flüssigphase mit Feststoffanteilen aus dem Verfahren entfernt und der andere Teil der bei der MAP-Fällung entstandenen Flüssigphase mit Feststoffanteilen einer Filterung zugeführt wird, wobei das bei der Filterung entstandene Retentat entweder der anaeroben Vergärung zugeführt und/oder aus dem Prozess ausgetragen wird und das Permeat nachfolgend einer elektrochemischen Oxidation zugeführt wird, und danach der Anolyt der Oxidation einer Umkehrosmosereaktion unterworfen und der Katholyt aus dem Verfahren entfernt wird, wobei alle Flüssigphasen mit Feststoffanteilen des Verfahrens, die aus dem Verfahren ausgetragen werden, und die nach der Umkehrosmosereaktion entstandene Flüssigphase einer Weiterverwertung zugeführt werden.

Vorteilhafterweise werden als Abfallprodukte Abfallprodukte aus der Lebensmittelindustrie, aus der Molkeverarbeitung, wie beispielweise Dünnschlempe, aus der Zuckerverarbeitung, aber auch konzentrierte Abwässerströme aus der Fisch- oder Käseverarbeitung oder der Stärkeherstellung eingesetzt.

Ebenfalls vorteilhafterweise werden Abfallprodukte mit einem Anteil von 5 - 12 g/l an organischen Säuren und Salzgehalten von 30 - 50 g/l eingesetzt.

Weiterhin vorteilhafterweise wird ein Teil der Flüssigphase mit Feststoffanteilen der anaeroben Vergärung und Fällung wieder der anaeroben Vergärung und Fällung zugeführt und der andere Teil einer Magnesiumammoniumphosphat-Fällung (MAP-Fällung) unterworfen.

Von Vorteil ist es auch, wenn der MAP-Fällung Magnesium als Magnesiumsalz, wie MgCl₂, Mg(OH)₂, MgO oder in Reinform, und Phosphor als H₃PO₄ und Hydroxidionen als NaOH zugeführt werden.

Weiterhin von Vorteil ist es, wenn als Filtration eine Nanofiltration durchgeführt wird.

Ebenfalls ist es von Vorteil, wenn als Gas Luft dem MAP-Reaktor zugeführt wird.

Vorteilhaft ist es auch, wenn die aus dem Verfahren ausgetragenen Flüssigphasen mit Feststoffanteilen als Düngemittel weiterverwendet werden und die aus dem Verfahren nach der Umkehrosmosereaktion ausgetragene Flüssigphase Trinkwasserqualität aufweist und als solches weiterverwendet wird.

Ebenfalls vorteilhaft ist es, wenn alle Flüssigphasen mit Feststoffanteilen bis zum Austragen der nach der Umkehrosmosereaktion entstandenen Flüssigphase im Gesamtverfahren verbleiben.

Die erfindungsgemäße Vorrichtung zur Aufbereitung von Abfallprodukten weist mindestens aus einem EGSB-Reaktor zur anaeroben Vergärung und Fällung mit mindestens Zuleitungen für die aufzubereitenden Abfallprodukte und Ableitungen für Biogas und die entstandenen Flüssigphasen mit Feststoffanteilen auf, und einen im Verfahrensablauf nachgeschalteten Reaktor zur MAP-Fällung (MAP-Reaktor) mit einem senkrecht im MAP-Reaktor angeordneten Rohr, wobei das eine Rohrende in Höhe der Zuleitungen der Flüssigphase mit Feststoffanteilen in den MAP-Reaktor und das andere Rohrende bis maximal 0,5 m unter dem Flüssigkeitsspiegel im Reaktor angeordnet ist, und mit mindestens einer Zuleitung für aus dem EGSB-Reaktor zur anaeroben Vergärung und Fällung entstandenen Flüssigphase mit Feststoffanteilen und mindestens Zuleitungen für Gase und Magnesium, in Form von Ionen oder magnesiumhaltigen Verbindungen, und Phosphorverbindungen und Hydroxidionen in Form von Verbindungen und mindestens Ableitungen für die im MAP-Reaktor entstandenen Flüssigphasen mit Feststoffanteilen, wobei die Zuleitung für Gase in Höhe des oberen Drittels des im MAP-Reaktor angeordneten Rohres vorhanden ist, und aus einer im Verfahrensablauf nachgeschalteten Filtervorrichtung mit mindestens einer Zuleitung für aus dem MAP-Reaktor entstandenen Flüssigphase mit Feststoffanteilen und mindestens eine Ableitung für das in der Filtervorrichtung entstandene Retentat, die entweder eine Zuleitung in den EGSB-Reaktor zur anaeroben Vergärung und Fällung ist und/oder eine Ableitung aus dem Prozess ist, und mindestens eine Ableitung für das in der Filtervorrichtung entstandene Permeat, und aus einer im Verfahrensablauf nachgeschalteten Vorrichtung zur Realisierung einer elektrochemischen Oxidation mit mindestens einer Zuleitung für die aus der Filtervorrichtung entstandenen Permeat und mindestens je einer Ableitung für den entstandenen Katholyt und Anolyt, und aus einer im Verfahrensablauf nachgeschalteten Vorrichtung zur Realisierung einer Umkehrosmosereaktion mit mindestens je einer Ableitung für die entstandenen Flüssigphasen mit Feststoffanteilen.

Vorteilhafterweise weist der EGSB-Reaktor zur anaeroben Vergärung und Fällung zwei in Reihe geschaltete Reaktoren auf, wobei eine Zuleitung für die im EGSB-Reaktor zur anaeroben Vergärung entstandene Flüssigphase mit Feststoffanteilen in den Reaktor zur Fällung vorliegt und der Reaktor zur Fällung mindestens zwei Ableitungen für die entstandene Flüssigphase mit Feststoffanteilen aufweist, und eine der Ableitungen für die Flüssigphase mit Feststoffanteilen entweder vollständig die Zuleitung für den MAP-Reaktor ist oder gleichzeitig eine Zuleitung für den MAP-Reaktor und eine Zuleitung für den EGSB-Reaktor zur anaeroben Vergärung und Fällung ist.

Ebenfalls vorteilhafterweise ist die Filtervorrichtung eine Vorrichtung zur Nanofiltration unter Einsatz von keramischen Filtern.

Erstmals ist ein Verfahren zur Aufbereitung von Abfallprodukten bekannt, bei dem eine deutlich bessere energetische und stoffliche Aufbereitung und/oder Nutzung der werthaltigen Inhaltstoffe der Abfallprodukte realisiert wird und dies mit einer kontinuierlich und effektiv arbeitenden Vorrichtung realisiert ist.

Erreicht wird dies durch die erfindungsgemäßen Verfahren und Vorrichtung.

Dabei werden bei dem erfindungsgemäßen Verfahren Abfallprodukte mit einem Gehalt von höchstens 12 g/l an organischen Säuren und Salzgehalten von höchstens 50 g/l eingesetzt. Dies können Abfallprodukte aus der Lebensmittelindustrie, wie Molke, Schlempe/Dünnschlempe, Abwässer aus der Fisch-, Käseverarbeitung, Stärke- und Zuckerherstellung sein. Als Dünnschlempe sollen im Rahmen dieser Erfindung Reststoffe aus einem molkebasierten Bioethanolprozess verstanden werden. Die Dünnschlempe ist charakterisiert durch einen hohen Gehalt an organischen Verbindungen insbesondere in Form von organischen Säuren neben geringen Mengen Restalkohol und nicht verwertetem Zucker. Weiterhin sind hohe Konzentrationen an ein- und zweiwertigen Salzen darin zu finden.

Die Salze sind meist ein- und höherwertige Salze, die sowohl in gelöster Form vorliegen als auch fällbar sind. Oft weisen diese Abfallprodukte einen geringen Feststoffgehalt insgesamt auf.

Neben den Salzen liegen auch organische Säuren, oft aber auch Reste von Zucker und Alkohol oder auch Nährstoffe, wie Stickstoff und Phosphor, oder auch Härtebildner, wie Calcium und Magnesium, vor.

Sofern die vorliegenden Abfallprodukte zur anaeroben Vergärung und Fällung noch nicht die ausreichend geringe Leitfähigkeit aufweisen, kann die Leitfähigkeit durch Einsatz von Teilströmen der Abwasserbehandlung, Brauchwasser, Rohabwasser oder Brüdenkondensate herabgesetzt werden.

Die anaerobe Vergärung und Fällung erfolgt mindestens in einem EGSB-Reaktor ("Expanded-Granular-Sludge-Bed"-Reaktor). Dazu wird die eingesetzte Biomasse in granulierte Form, meist als Pellets eingebracht und der Reaktor bis zu 70 % des Volumens gefüllt. Die meist flüssigen Abfallprodukte, die erfindungsgemäß eingebracht werden, werden von unten in den Reaktor eingebracht und über die eingesetzte Biomasse geleitet.

Bekanntermaßen weisen die EGSB-Reaktoren eine schlanke Bauform mit vergleichsweise großen Höhen auf, einen trichterförmigen Boden mit einem Ablauf für Flüssigphase mit Feststoffanteilen und mindestens einem tangentialen Einlauf des Zulaufs im trichterförmigen Boden, mindestens einem Abzug für das entstehende Biogas und einem Ablauf für die Flüssigphase mit Feststoffanteilen. Dem zur anaeroben Vergärung eingesetzten EGSB-Reaktor, muss direkt nachfolgend ein Fällungsreaktor im Verfahrensverlauf geschaltet sein. Die im EGSB-Reaktor anfallende Flüssigphase mit Feststoffanteilen wird vollständig in den Fällungsreaktor überführt, wo die Abscheidung der entstandenen Fällprodukte durchgeführt wird, die als Flüssigphase mit Feststoffanteilen entstehen und aus dem Verfahren ausgetragen werden können. Mindestens ein Teil der im Fällungsreaktor entstandenen Flüssigphase mit Feststoffanteilen wird entweder vollständig in den nachgeschalteten MAP-Reaktor überführt oder höchstens teilweise wieder dem Zulauf des EGSB-Reaktors zugeführt. Der EGSB-Reaktor weist ebenfalls einen Austrag für einen Teil der entstandenen Flüssigphase mit Feststoffanteilen am Reaktorboden vor, bei der es sich im Wesentlichen um unkontrolliert gebildete kristalline Fällprodukte und teilweise Biomasse handelt.

Die Durchmischung in einem EGSB-Reaktor erfolgt hydraulisch durch Rezirkulation im Reaktor oder über einen Ablauf zu einem Einlauf, wodurch eine permanente Durchströmung mit Aufströmgeschwindigkeiten der flüssigen Phase von 4 - 20 m/h realisiert werden.

Bei Verweilzeiten der Abfallstoffe im EGSB-Reaktor für die anaerobe Vergärung und Fällung von < 72 Stunden erfolgt die anaerobe Vergärung der organischen Inhaltsstoffe und die Bildung von Biogas. Das Biogas weist einen hohen Methangehalt von > 60 Vol.-% auf. Das erzeugte Biogas wird kontinuierlich über Gasleitungen abgeführt und muss vor einer energetischen oder stofflichen Nutzung noch aufbereitet werden.

Die in den eingesetzten Abprodukten vorhanden organischen Substanzen werden in der anaeroben Vergärung und Fällung zu ca. 95 % abgebaut.

In der industriellen Produktion können durch höhere Konzentrationen von beispielsweise fällbaren Salzen und/oder durch den anaeroben Abbau erzeugte und freigesetzte Nährstoffe verschiedenen Löslichkeitsprodukte überschritten werden, so dass es im EGSB-Reaktor zu unkontrollierten Ausfällungen von unterschiedlichen mineralischen Verbindungen kommt. Dies sind meist Formen des Apatits oder Struvits. Struvit ist Magnesiumammoniumphosphat = MAP = NH₄MgPO₄-6H₂O. Feinpartikuläre Ausfällungen als Teil der Flüssigphase mit Feststoffanteilen können auch im Fällungsreaktor abgeschieden werden.

Diese Fällungsprodukte werden zur Aufrechterhaltung eines stabilen biologischen Abbauprozesses aus dem Verfahren entfernt und können beispielsweise zu Düngemittel weiterverarbeitet werden.

Durch die charakteristische Bau- und Betriebsweise des EGSB-Reaktors erfolgt die Bildung einer zweiten Fällungsproduktfraktion im Einlaufbereich des Reaktors infolge der Vermischung von Zu- und Ablauf in diesem Bereich. Grund dafür ist die spontane Änderung der Milieuverhältnisse hinsichtlich des pH-Wertes als auch der Konzentrationen an gelösten Salzen durch die Vermischung dieser beiden Stoffströme. Diese Feststoffe verbleiben aufgrund ihrer Größe und Dichte im trichterförmigen Einlaufbereich des EGSB-Reaktors und werden anders als die feinpartikulären Fällprodukte nicht nach oben aus dem Reaktor ausgetragen. Der Abzug dieser Feststoffe erfolgt verfahrensbedingt nach unten über einen Bodenablass.

Nach der anaeroben Vergärung und Fällung und der Reduktion der hauptsächlich organischen und im geringen Umfang von mineralischen Inhaltsstoffen wird der abgereicherte Prozesswasserstrom als Flüssigphase mit Feststoffanteilen entweder vollständig oder als Teilstrom in den nachgeschalteten MAP-Reaktor geleitet.

Alle im Verfahren entstandenen Flüssigphasen mit Feststoffanteilen weisen im Wesentlichen nur so viel Feststoffe auf, dass diese Phasen noch pumpbar sind.

Der erfindungsgemäß vorhandene MAP-Reaktor ist bekanntermaßen ebenfalls in schlanker hoher Bauform vorhanden und weist üblicherweise einen trichterförmigen Boden auf. Innerhalb des Reaktors ist zentrisch ein senkrecht angeordnetes Rohr vorhanden, wobei das eine Rohrende im Höhe des Trichters am Reaktorboden angeordnet ist und das andere Rohrende bis maximal 0,5 m unter dem Flüssigkeitsspiegel im Reaktor. In verschiedenen Höhen wird von außen über mehrere Zuleitungen Gas, vorteilhafterweise Luft, in das Rohr geleitet. Durch die im Rohr aufsteigende Gasströmung wird die Flüssigphase mit Feststoffanteilen aus dem unteren Reaktorteil nach oben gefördert. Es bildet sich eine Schlaufenströmung (Airliftschlaufe) innerhalb des MAP-Reaktors aus, so dass die nach oben geförderte Flüssigphase mit Feststoffanteilen zwischen den beiden Rohrwandungen wieder nach unten sinkt und der Reaktorinhalt dadurch kontinuierlich durchmischt wird. Infolge des Gaseintrages erfolgen die Strippung von gelöstem CO₂ und simultan dazu die Anhebung des pH-Wertes in einen für die MAP-Fällung optimalen Bereich von 8,2 bis 9,0. Parallel dazu wird durch Zugabe von Hydroxidionen (z.B. NaOH) der pH-Wert vor Zugabe der Hilfschemikalien angehoben und über die Reaktionszeit gehalten. Eine gesonderte Zugabe von Hydroxidionen ist dann nicht erforderlich, wenn durch die magnesiumhaltigen Verbindungen und/oder Phosphorverbindungen Hydroxidionen in ausreichendem Maße in das Verfahren eingebracht worden sind.

Für die Bildung von MAP ist es erforderlich, dass die Reaktionspartner (Elemente/Verbindungen) Magnesium, Ammonium und Phosphat in einem stöchiometrische Verhältnis von mindestens 1 : 1 : 1 vorliegen. Nach anaerober Vergärung und Fällung kann die Konzentration von Ammonium überstöchiometrisch und die von Magnesium unterstöchiometrisch gegenüber der Phosphatkonzentration vorliegen. Mit der Zielstellung Phosphat weitgehend zu reduzieren, ist es daher erforderlich, Magnesium überstöchiometrisch zuzugeben.

Nach erfolgter MAP-Fällung liegt oft auch Ammonium in hoher Konzentration vor, was auch zu nachfolgend erhöhten Aufwendungen zur Entfernung des Ammoniums führt. Daher wird vorteilhafterweise während der MAP-Fällung Phosphat und Ammonium gleichzeitig entfernt. Dazu wird neben Magnesium dann auch Phosphat, vorteilhafterweise als H₃PO₄ oder als Phosphatsalz oder als phosphorhaltige organische Stoffe oder Verbindungen, in stöchiometrischem Verhältnis zu Ammonium von mindestens 1 : 1 bis zu 1,4 : 1 in den MAP-Reaktor zugeführt.

Als magnesiumhaltige Verbindungen können unterschiedliche Magnesiumsalze eingesetzt werden. Magnesiumchlorid bietet den Vorteil relativ leicht löslich zu sein und nahezu vollumfänglich als Reaktionspartner zur MAP-Fällung zur Verfügung zu stehen. Die Bildung von MAP findet in einem relativ kurzen Zeitraum von wenigen Minuten statt. Nachteilig ist beim Einsatz von Magnesiumchlorid, dass die Konzentration an Chlorid in der Flüssigphase erhöht wird und damit zu erhöhten Aufwendungen bei der späteren Elimination von einwertigen Ionen führen kann. Magnesiumhydroxid ist gegenüber Magnesiumchlorid in Teilen schwerer löslich, somit findet die Reaktion über eine relativ langen Zeitraum von mehreren Stunden statt. Magnesium wird zur sicheren Elimination von Ammonium und Phosphat mindestens 1,3fach überdosiert. Die Ablaufkonzentration von Magnesium sollte nach der MAP-Fällung im Bereich von 30-100 mg/l liegen.

Der Verfahrensablauf der MAP-Fällung kann auf zwei unterschiedlichen Wegen erfolgen.

Ein Weg besteht darin, dass der Betrieb des MAP-Reaktors in mehreren aufeinanderfolgenden Teilabschnitten (SBR-Betrieb) abschnittsweise diskontinuierlich durchgeführt wird. Der erste Teilabschnitt beinhaltet die Zuführung eines Gases, vorteilhafterweise Luft, wodurch der Reaktorinhalt umgewälzt und gemischt wird. Dabei stellt sich der pH-Wert über die Dauer der Belüftung ein. Dieser Teilabschnitt kann in Abhängigkeit von jeweils erreichten und gewünschten pH-Wert wenige Minuten oder einige Stunden durchgeführt werden. Um kürze Zeiten für die Einstellung des pH-Werte einzustellen, kann simultan zur Belüftung auch der Eintrag von Verbindungen mit Hydroxidionen erfolgen. Nachdem ein pH-Wert für die MAP-Fällung im optimalen Bereich von 8,2 bis 9,0 erreicht ist, werden die anderen Verbindungen von Magnesium und Phosphor und Hydroxidionen zugegeben. Die Zuführung der Verbindungen kann dabei an unterschiedlichen Orten im Reaktor erfolgen, sowohl von oben, oder im trichterförmigen Bereich oder im Rohr oder an anderen Stellen. In Abhängigkeit von den jeweils eingesetzten Verbindungen und Mengen an Verbindungen kann die Fällungsreaktion im MAP-Reaktor in wenigen Minuten bis zu mehreren Stunden realisiert werden. Nach Abschluss der Fällungsreaktion sind Ammonium und Phosphat in Form von MAP ausgefällt. Danach muss die Zufuhr des Gases reduziert oder beendet werden. Der Reaktorinhalt wird dann hydraulisch beruhigt und in einem weiteren Teilabschnitt des Verfahrens wird ein Teil der entstandenen Flüssigphase mit Feststoffanteilen sedimentiert. In Abhängigkeit von der Reaktorhöhe des MAP-Reaktors und der gewünschten MAP-Kristallgröße kann die Sedimentationsdauer bis zu mehreren Stunden dauern. Der andere Teil der entstandenen Flüssigphase mit Feststoffanteilen wird aus dem MAP-Reaktor entfernt und der Filterung zugeführt.

Ein Teil der ausgefällten MAP-Kristalle in der Flüssigphase mit Feststoffanteilen wird über den Bodenablass aus dem Verfahren entfernt und einer Weiterverwertung zugeführt. Der verbleibende Teil der MAP-Kristalle verbleibt im Reaktor und dient als Kristallisationskeime.

Der zweite Weg besteht darin, dass das MAP-Fällungsverfahren im MAP-Reaktor vollständig kontinuierlich durchgeführt wird. Dazu wird der pH-Wert permanent kontrolliert und das Gas, vorteilhafterweise Luft und die Reaktionschemikalien in den Zulauf der Flüssigphase kontinuierlich zugegeben. Durch die Umwälzung und Durchmischung mit dem Gas und die sich ausbildende Schlaufenströmung im Reaktor werden im Bereich der Zuführung der Flüssigphase mit Feststoffanteilen die im Reaktor vorhandene Flüssigphase mit Feststoffanteilen ständig mit fein suspendiert vorliegenden Mikro-MAP-Kristallen vermischt, die sich im Bereich der Zuführung der Flüssigphase mit Feststoffanteilen und der Verbindungen ausbilden und im gesamten Reaktor aufgrund der Aufströmgeschwindigkeit und Schlaufenströmung der Flüssigphase mit Feststoffanteilen verteilen. Der Zulauf der Flüssigphase mit Feststoffanteilen wird dabei vorteilhafterweise tangential zum Reaktorquerschnitt im trichterförmigen Bereich eingeleitet. Dadurch bleiben vorteilhafterweise die sich in diesem Bereich bildenden Mikro-MAP-Kristalle in Schwebe und sedimentieren nicht oder nur geringfügig. Diese Mikro-MAP-Kristalle dienen teilweise als Kristallisationskeime und vergrößern sich zum Teil bei fortlaufender MAP-Fällung. Bei Überschreiten einer bestimmten Größe können sie nicht mehr in Schwebe bleiben und sedimentieren auf den Trichterboden, von wo aus sie aus dem Verfahren ausgetragen werden können (Klassierung). Durch Einbauten in den trichterförmigen Teil des Reaktors oder auch in anderen Teilen kann die MAP-Sedimentation unterstützt und beschleunigt werden.

Der Teil der ausgefällten MAP-Kristalle der über den Bodenablass aus dem Verfahren entfernt wird, wird einer Weiterverwertung zugeführt.

Die aus dem MAP-Reaktor austretende Flüssigphase mit Feststoffanteilen wird nachfolgend vollständig einer Filtration unterworfen. Diese Filtration ist vorteilhafterweise eine Nanofiltration unter Einsatz von keramischen Nanofiltrationsmembranen. Durch die Filtration werden aus der Flüssigphase mit Feststoffanteilen noch vorhandene feinpartikuläre anorganische und organische Stoffe, Makromoleküle und teilweise höherwertige Salze entfernt. Das dabei entstehende Retentat ist ein mit den genannten Stoffen angereichertes Konzentrat und wird dann wieder dem anaeroben Reaktor zugeführt und/oder über beispielsweise Flockungs- und/oder Fällungsreaktionen und einer Entwässerung weiterverarbeitet.

Das Permeat der Filtration wird nachfolgend vollständig einer elektrochemischen Oxidation unterworfen. Sowohl durch die Anodenreaktion selbst als auch indirekt über anodisch erzeugte reaktive Sauerstoffspezies führt die Oxidation von Ammonium zu Nitrat. Dabei wird das nach der MAP-Fällung in der Flüssigphase mit Feststoffanteilen noch verbleibende Ammonium auf Gehalte von ≤ 0,5 mg/l verringert. Aufgrund der in der Flüssigphase mit Feststoffanteilen enthaltenden Salzkonzentration und der damit einhergehenden elektrischen Leitfähigkeit ist der Einsatz einer elektrochemischen Oxidation begünstigt. Als Katholyt dient dabei vorzugsweise eine elektrochemisch weitgehend inerte Salzlösung, die so ausgewählt wird, dass die enthaltenen Ionen den Prozess nicht stören. An der Kathode entsteht in der Regel Wasserstoff der abgeführt und weiter genutzt werden kann. Der Katholyt wird nach einer bestimmten Nutzungsdauer aus dem Verfahren entfernt und einer Weiterverwendung zugeführt. Der Anolyt wird nachfolgend vollständig einer Umkehrosmose-Verfahrensstufe zugeführt.

Sowohl Katholyt als auch Anolyt sind Flüssigphasen.

Nachfolgend werden bei der Umkehrosmosereaktion die einwertigen Salze und Reaktionsprodukte der elektrochemischen Oxidation aus dem Anolyt entfernt.

Vorteilhafterweise findet dies in einem Mehrstufenprozess statt, wodurch die Salzkonzentration in dem Anolyt bis auf Werte von < 0,5 g/l abgesenkt werden kann. Zur Anpassung des pH-Wertes im Endprodukt können bei der Umkehrosmosereaktion Säuren und Laugen eingesetzt werden. Auch das Kalk-Kohlensäure-Gleichgewicht kann nach der Umkehrosmosereaktion mittels Zugabe von Zusatzstoffen eingestellt werden.

Die Flüssigphase mit Feststoffanteilen ist nach der Umkehrosmosereaktion Wasser, welches zum größten Teil die Anforderungen nach der deutschen Trinkwasserverordnung erfüllt.

Mit der erfindungsgemäßen Lösung kann ein vollständiges Verfahren angegeben werden, mit dem Abfallstoffe mit einem Anteil von höchstens 12 g/l an organischen Säuren und Salzgehalten von höchstens 50 g/l eingesetzt im Wesentlichen vollständig wirtschaftlich verwertet werden können und werthaltige Inhaltsstoffe umfänglich einer Nutzung zugeführt werden können. Die mit den Ausgangsstoffen und im weiteren Prozess eingebrachte oder entstehende Flüssigkeit wird abschließend zu Wasser in Trinkwasserqualität aufbereitet, welches beispielsweise auch wieder in der ersten Verfahrensstufe, der anaeroben Vergärung und Fällung wieder zugeführt werden kann.

Sowohl verfahrenstechnisch als auch vorrichtungsmäßig ist die erfindungsgemäße Lösung als eine Verfahrenskaskade für ein kontinuierlich arbeitendes Verfahren konzipiert, welches störungsfrei die Abfallprodukte verwertet und eine deutlich verbesserte energetische und stoffliche Aufbereitung und/oder Nutzung der werthaltigen Inhaltsstoffe der eingesetzten Abfallstoffe realisiert.

Durch das Vorhandensein eines Fällungsreaktors unmittelbar nachgeschaltet dem Reaktor zur anaeroben Vergärung und Fällung wird die Fällung von MAP verfahrenstechnisch und vorrichtungsmäßig getrennt, so dass die einzelnen Verfahrensschritte besser gesteuert werden können. Der abgeführte Teil der Flüssigphase mit Feststoffanteilen aus dem Fällungsreaktor führt zu einer Verbesserung der Reinheit der Biomasse im Reaktor zur anaeroben Vergärung und Fällung und hat zusätzlich den Vorteil der getrennten Verwertung der ausgetragenen Flüssigphase mit Feststoffanteilen.

Die an sich bekannte Technologie der MAP-Fällung erfolgt in einem völlig neuartigen Reaktor. Dieser Reaktor zeichnet sich gegenüber dem Stand der Technik dadurch aus, dass der Flüssigkeitsspiegel im MAP-Reaktor zwischen 10 m und 30 m - vorzugsweise 24 m - beträgt. Bei der Gestaltung des Reaktors wurde das an sich bekannte Verfahren eines Schlaufenreaktors kreativ auf das MAP-Verfahren angewandt. Bei den bekannten Schlaufenreaktoren erfolgt die Einführung der Umwälzgas ausschließlich am Reaktorboden. Bei dem erfindungsgemäß eingesetzten MAP-Reaktor erfolgt die Einführung der Umwälzgas im oberen Drittel des Rohres im Reaktor, zwischen 6 und 10 m unter dem Flüssigkeitsspiegel, vorzugsweise in 8 m Höhe. Dadurch erfolgen eine deutlich bessere Ausstrippung des CO₂ und damit eine Optimierung des für die MAP-Ausfällung erforderlichen pH-Wertes.

Damit werden wesentlich höheren Flüssigkeitshöhen im MAP-Reaktor als nach dem Stand der Technik für derartige MAP-Reaktoren erreicht.

Durch die erfindungsgemäße Lösung ist auch eine aerobe biologische Behandlung der im Verfahren entstandenen Produkte nicht erforderlich, was zu einer deutlichen Einsparung an Investitionen, Vorrichtungen, Energie und sonstigen Betriebskosten, wie Schlammentsorgung usw. führt.

Die nach der MAP-Fällung noch vorhandenen feindispersen Mineralien und organischen Bestandteile und Kolloide werden durch die Filtration in ausreichender Weise entfernt, was deutlich einfacher und kostengünstiger ist.

Die vorteilhafterweise eingesetzte Nanofiltration, die nach dem Stand der Technik mit Kunststoffen, wie Polyethersulfonen, durchgeführt wurde, wird erfindungsgemäß mit keramischen Nanofiltrationsmembranen durchgeführt. Diese keramischen Nanofiltrationsmembranen können dauerhaft eingesetzt werden, ohne Schädigungen und ohne Nachteile für die Filtration.

Nachfolgend wird die Erfindung an einem Ausführungsbeispiel näher erläutert.

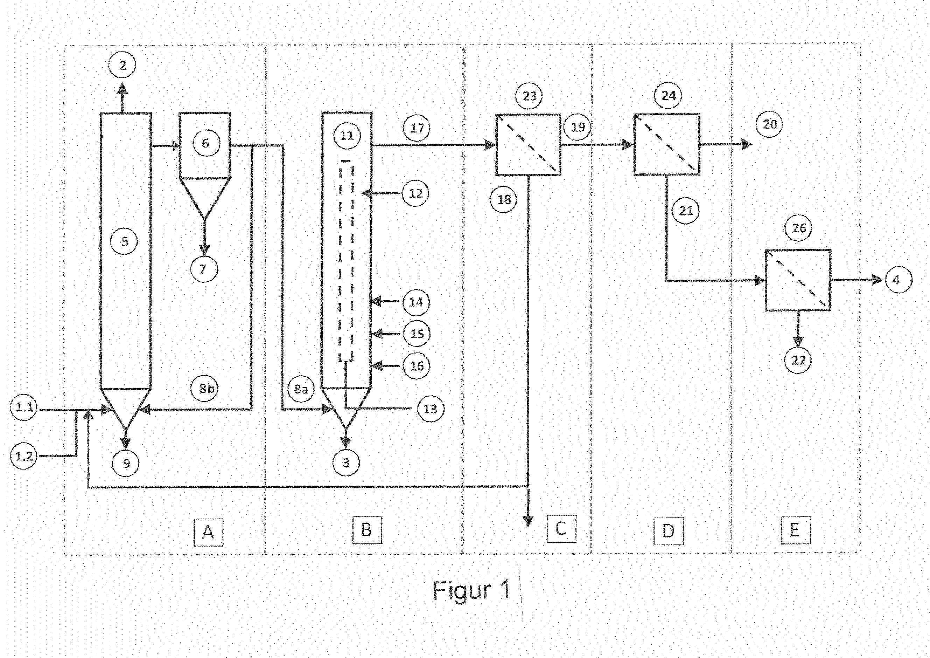

Dabei zeigt
- Fig. 1: ein Schema eines erfindungsgemäßen Verfahrensablaufes in erfindungsgemäß eingesetzten Vorrichtungen

### Beispiel 1

500 m³/d Dünnschlempe 1.1 aus einem molkebasierten Bioethanolprozess werden mit 250 m³/d Abwasser 1.2 in einen EGSB-Reaktor 5 von unten kontinuierlich eingeführt und einer anaeroben Vergärung und Fällung A bei 37 °C zur Erzeugung von Biogas 2 zugeführt. Es wird auf diese Weise Biogas 2 mit einem Energieinhalt von 85.000 kWh/d erzeugt. Die 1,5 m³/d anfallende Flüssigphase mit Feststoffanteilen 9 als Sediment wird aus dem EGSB-Reaktor 5 nach unten ausgetragen. Die entstehende Flüssigphase mit Feststoffanteilen wird nach oben in einen Reaktor 6 zur Sedimentation des feinpartikulären Anteils ausgetragen. 3,4 m³/d Fällschlamm 8a, 8b wird als Flüssigphase mit Feststoffanteilen aus dem Reaktor 6 über eine spezielle Austragsvorrichtung (Vorrichtung) ausgetragen, die sich ca. in der Höhenmitte des Reaktors 6 befindet. Die Flüssigphase mit Feststoffanteilen 8a, 8b wird dem EGSB-Reaktor 5 von unten und einem MAP-Reaktor 11 vorteilhafterweise von oben zugeführt. Der MAP-Reaktor 11 ist insgesamt 24 m hoch, mit einer Flüssigkeitshöhe von 22 m und einem senkrecht im MAP-Reaktor 11 angeordneten Rohr 13, wobei das eine Rohrende in Höhe der Zuleitungen der Flüssigphase mit Feststoffanteilen 8a in den MAP-Reaktor 11 angeordnet ist und das andere Rohrende 0,5 m unter dem Flüssigkeitsspiegel im vollständig gefüllten Reaktor 11 angeordnet ist. Die Flüssigphase mit Feststoffanteilen 8a steigt bei Erstfüllung insgesamt im MAP-Reaktor 11 auf 22 m an. Die Temperatur im MAP-Reaktor 11 beträgt 30 °C. In das im MAP-Reaktor 11 befindliche Rohr 13 wird im oberen Drittel des Rohres 13 Luft durch mindestens eine spezielle Düse 12 grobblasig eingedüst, wodurch die im Rohr 13 befindliche Flüssigkeit nach oben bewegt wird. Bei gleichmäßiger Lufteindüsung entsteht nach kurzer Zeit eine Schlaufenströmung der Flüssigphase im MAP-Reaktor 11. Weiter werden in die Flüssigkeit im Rohr 13 im oberen Rohrbereich 468 l/h einer 2M MgCl2-Lösung 14, 63 l/h einer H₃PO₄-Lösung (85%ig) 15 und 430 l/h NaOH-Lösung (25%ig) 16 zugegeben. Die während der MAP-Fällung B 6,4 t/d anfallende Flüssigphase mit Feststoffanteilen 3 wird nach unten aus dem MAP-Reaktor 11 ausgetragen. Die aus dem MAP-Reaktor 11 überlaufende Flüssigphase mit Feststoffanteilen 17 in einer Menge von ca. 750 m³/d wird dann einer Nanofiltration 23 zugeleitet. Die Filtration C erfolgt unter Einsatz von keramischen Nanofiltrationsmembranen mit einem Cut-Off von 450 g/mol und bei einer Temperatur von 40 °C. Durch die Filtration C werden aus der Flüssigphase mit Feststoffanteilen 17 noch vorhandene feinpartikuläre anorganische und organische Stoffe, Makromoleküle und teilweise höherwertige Salze entfernt. Das Retentat 18 in einer Menge von 38 m³/d wird vollständig dem anaeroben Reaktor 5 zugeführt. Das Permeat 19 der Nanofiltration 23 wird vollständig einer elektrochemischen Oxidation 24, D zugeführt. Die elektrochemische Oxidation 24, D findet bei einer Temperatur von 40 °C statt. Dabei wird das nach der MAP-Fällung B in der Flüssigphase mit Feststoffanteilen 17 noch verbleibende Ammonium auf Gehalte von 0,1- 0,2 mg/l verringert. Der entstandene Anolyt 21 wird nachfolgend vollständig einer Umkehrosmose-Anlage 25 zugeführt. Die Temperatur der Umkehrosmose E beträgt 40 °C. Während der Umkehrosmose E werden die einwertigen Salze und Reaktionsprodukte der elektrochemischen Oxidation aus dem Anolyt 21 entfernt, wodurch die Salzkonzentration in dem Anolyt 21 bis auf Wert von < 0,5 g/l abgesenkt werden können.

Die dabei entstandene Flüssigphase 22 wird weiterverwendet. Die entstandene Flüssigphase 4 ist Wasser annähernd vollumfänglich in Trinkwasserqualität.

### Bezugszeichenliste

- 1.1: Ausgangsstoffe
- 1.2: Ausgangshilfsstoffe
- 2: Biogas
- 3: MAP- Flüssigphase mit Feststoffanteilen = Dünger
- 4: Flüssigphase = Wasser
- 5: EGSB-Reaktor
- 6: Reaktor zur Fällung
- 7: Flüssigphase mit Feststoffanteilen aus Reaktor zur Fällung
- 8b: Flüssigphase mit Feststoffanteilen aus Reaktor zur Fällung
- 9: Flüssigphase mit Feststoffanteilen aus EGSB-Reaktor
- 8a: Flüssigphase mit Feststoffanteilen aus EGSB-Reaktor und Reaktor zur Fällung
- 11: MAP-Reaktor
- 12: Gaszuführung
- 13: Rohr in MAP-Reaktor
- 14: Zuführung Magnesiumverbindung
- 15: Zuführung Phosphorverbindung
- 16: Zuführung Hydroxidionen
- 17: Flüssigphase mit Feststoffanteilen MAP-Reaktor
- 18: Retentat
- 19: Permeat
- 20: Katholyt
- 21: Anolyt
- 22: Flüssigphase nach Umkehrosmosereaktion
- 23: Filtervorrichtung
- 24: Oxidationsvorrichtung
- 25: Umkehrosmose-Vorrichtung

- A: Anaerobe Vergärung und Fällung
- B: MAP-Fällung
- C: Filterung
- D: elektrochemische Oxidation
- E: Umkehrosmosereaktion

## Patentansprüche

1. Verfahren zur Aufbereitung von Abfallprodukten, bei dem Abfallprodukte (1.1) mit einem Gehalt von höchstens 12 g/l an organischen Säuren und Salzgehalten von höchstens 50 g/l zuerst einer anaeroben Vergärung und Fällung (A) zur Erzeugung von Biogas (2) unterzogen werden, wobei ein Teil der dabei entstandenen Flüssigphase mit Feststoffanteilen (9) aus dem Verfahren entfernt wird und der andere Teil der entstandenen Flüssigphase mit Feststoffanteilen (8a) mindestens teilweise einer Magnesiumammoniumphosphat-Fällung (MAP-Fällung) (B) unterworfen wird, wobei während der MAP-Fällung (B) mindestens ein Gas und Magnesium, in Form von Ionen oder magnesiumhaltigen Verbindungen, und Phosphorverbindungen und Hydroxidionen in Form von Verbindungen in die Flüssigphase mit Feststoffanteilen (8a) zugeführt werden und durch die Gaszuführung (12) eine Schlaufenströmung der Flüssigphase mit Feststoffanteilen (8a) während der MAP-Fällung (B) realisiert wird, dann ein Teil der bei der MAP-Fällung (B) entstandenen Flüssigphase mit Feststoffanteilen (3) aus dem Verfahren entfernt und der andere Teil der bei der MAP-Fällung (B) entstandenen Flüssigphase mit Feststoffanteilen (17) einer Filterung (C) zugeführt wird, wobei das bei der Filterung (C) entstandene Retentat (18) entweder der anaeroben Vergärung (A) zugeführt und/oder aus dem Prozess ausgetragen wird und das Permeat (19) nachfolgend einer elektrochemischen Oxidation (D) zugeführt wird, und danach der Anolyt (21) der Oxidation (D) einer Umkehrosmosereaktion (E) unterworfen und der Katholyt (20) aus dem Verfahren entfernt wird, wobei alle Flüssigphasen mit Feststoffanteilen (7, 9, 18, 22) des Verfahrens, die aus dem Verfahren ausgetragen werden, und die nach der Umkehrosmosereaktion (E) entstandene Flüssigphase (4) einer Weiterverwertung zugeführt wird.

2. Verfahren nach Anspruch 1, bei dem als Abfallprodukte (1.1) Abfallprodukte aus der Lebensmittelindustrie, aus der Molkeverarbeitung, wie beispielweise Dünnschlempe, aus der Zuckerverarbeitung, aber auch konzentrierte Abwässerströme aus der Fisch- oder Käseverarbeitung oder der Stärkeherstellung eingesetzt werden.

3. Verfahren nach Anspruch 1, bei dem Abfallprodukten (1.1) mit einem Anteil von 5 - 12 g/l an organischen Säuren und Salzgehalten von 30 - 50 g/l eingesetzt werden.

4. Verfahren nach Anspruch 1, bei dem ein Teil der Flüssigphase mit Feststoffanteilen (8b) der anaeroben Vergärung und Fällung (A) wieder der anaeroben Vergärung und Fällung (A) zugeführt und der andere Teil (8a) einer Magnesiumammoniumphosphat-Fällung (MAP-Fällung) (B) unterworfen wird.

5. Verfahren nach Anspruch 1, bei dem der MAP-Fällung (B) Magnesium als Magnesiumsalz, wie MgCl₂, Mg(OH)₂, MgO oder in Reinform, und Phosphor als H₃PO₄ und Hydroxidionen als NaOH zugeführt werden.

6. Verfahren nach Anspruch 1, bei dem als Filtration (C) eine Nanofiltration durchgeführt wird.

7. Verfahren nach Anspruch 1, bei dem als Gas Luft den MAP-Reaktor (B) zugeführt wird.

8. Verfahren nach Anspruch 1, bei dem die aus dem Verfahren ausgetragenen Flüssigphasen mit Feststoffanteilen (7, 9, 18, 22) als Düngemittel weiterverwendet werden und die aus dem Verfahren nach der Umkehrosmosereaktion (E) ausgetragene Flüssigphase (4) Trinkwasserqualität aufweist und als solches weiterverwendet wird.

9. Vorrichtung zur Aufbereitung von Abfallprodukten, mindestens bestehend aus einem EGSB-Reaktor (5) zur anaeroben Vergärung und Fällung (A) mit mindestens Zuleitungen für die aufzubereitenden Abfallprodukte (1.1) und Ableitungen für Biogas (2) und die entstandenen Flüssigphasen mit Feststoffanteilen (9, 8a, 8b), und aus einem im Verfahrensablauf nachgeschalteten Reaktor zur MAP-Fällung (11) (MAP-Reaktor) (B) mit einem senkrecht im MAP-Reaktor (11) angeordneten Rohr (13), wobei das eine Rohrende in Höhe der Zuleitungen der Flüssigphase mit Feststoffanteilen (8a) in den MAP-Reaktor (11) und das andere Rohrende bis maximal 0,5 m unter dem Flüssigkeitsspiegel im Reaktor (11) angeordnet ist, und mit mindestens einer Zuleitung für aus dem EGSB-Reaktor (5) zur anaeroben Vergärung und Fällung (A) entstandenen Flüssigphase mit Feststoffanteilen (8a) und mindestens Zuleitungen für Gase (12) und Magnesium, in Form von Ionen oder magnesiumhaltigen Verbindungen (14), und Phosphorverbindungen (15) und Hydroxidionen in Form von Verbindungen (16) und mindestens Ableitungen für die im MAP-Reaktor (11) entstandenen Flüssigphasen mit Feststoffanteilen (3, 17), wobei die Zuleitung für Gase (12) in Höhe des oberen Drittels des im MAP-Reaktor (11) angeordneten Rohres (13) vorhanden ist, und aus einer im Verfahrensablauf nachgeschalteten Filtervorrichtung (23) mit mindestens einer Zuleitung für aus dem MAP-Reaktor (11) entstandenen Flüssigphase mit Feststoffanteilen (17) und mindestens eine Ableitung für das in der Filtervorrichtung (23) entstandene Retentat (18), die entweder eine Zuleitung in den EGSB-Reaktor (5) zur anaeroben Vergärung und Fällung (A) ist und/oder eine Ableitung aus dem Prozess ist, und mindestens eine Ableitung für das in der Filtervorrichtung (23) entstandene Permeat (19), und aus einer im Verfahrensablauf nachgeschalteten Vorrichtung zur Realisierung einer elektrochemischen Oxidation (24) mit mindestens einer Zuleitung für die aus der Filtervorrichtung (23) entstandenen Permeat (19) und mindestens je einer Ableitung für den entstandenen Katholyt (20) und Anolyt (21), und aus einer im Verfahrensablauf nachgeschalteten Vorrichtung zur Realisierung einer Umkehrosmosereaktion (25) mit mindestens je einer Ableitung für die entstandenen Flüssigphasen mit Feststoffanteilen (22, 4).

10. Vorrichtung nach Anspruch 9, bei der der EGSB-Reaktor (5) zur anaeroben Vergärung und Fällung (A) aus zwei in Reihe geschalteten Reaktoren (5, 6) besteht, wobei eine Zuleitung für die im EGSB-Reaktor (5) zur anaeroben Vergärung (A) entstandene Flüssigphase mit Feststoffanteilen in den Reaktor zur Fällung (6) vorliegt und der Reaktor zur Fällung (6) mindestens zwei Ableitungen für die entstandene Flüssigphase mit Feststoffanteilen (7, 8a, 8b) aufweist, und eine der Ableitungen für die Flüssigphase mit Feststoffanteilen (8a, 8b) entweder vollständig die Zuleitung für den MAP-Reaktor (11) ist oder gleichzeitig eine Zuleitung für den MAP-Reaktor (11) und eine Zuleitung für den EGSB-Reaktor (5) zur anaeroben Vergärung und Fällung (A) ist.

11. Vorrichtung nach Anspruch 9, bei der die Filtervorrichtung (23) eine Vorrichtung zur Nanofiltration unter Einsatz von keramischen Filtern ist.

## Claims

1. Process for treating waste products, wherein waste products (1.1) having a content of not more than 12 g/l of organic acids and salt contents of not more than 50 g/l are firstly subjected to an anaerobic fermentation and precipitation (A) to produce biogas (2), where part of the resulting liquid phase containing solid constituents (9) is removed from the process and the other part of the liquid phase formed containing solid constituents (8a) is at least partly subjected to a magnesium ammonium phosphate precipitation (MAP precipitation) (B), where at least one gas and magnesium, in the form of ions or magnesium-containing compounds, and also phosphorus compounds and hydroxide ions in the form of compounds are introduced into the liquid phase containing solid constituents (8a) during the MAP precipitation (B) and a loop flow of the liquid phase containing solid constituents (8a) through the gas feed conduit (12) is realized during the MAP precipitation (B), part of the liquid phase containing solid constituents (3) formed in the MAP precipitation (B) is then removed from the process and the other part of the liquid phase containing solid constituents (17) formed in the MAP precipitation (B) is fed to a filtration (C), where the retentate (18) formed in the filtration (C) is either fed to the anaerobic fermentation (A) and/or discharged from the process and the permeate (19) is subsequently fed to an electrochemical oxidation (D) and the anolyte (21) from the oxidation (D) is then subjected to a reverse osmosis reaction (E) and the catholyte (20) is removed from the process, where all liquid phases containing solid constituents (7, 9, 18, 22) which arise in the process and are discharged from the process and the liquid phase (4) formed after the reverse osmosis reaction (E) are passed to a further use.

2. Process according to Claim 1, wherein waste products from the food industry, from dairy processing, for example thin stillage, from sugar processing or else concentrated wastewater streams from fish or cheese processing or starch production are used as waste products (1.1).

3. Process according to Claim 1, wherein waste products (1.1) having a proportion of 5-12 g/l of organic acids and salt contents of 30-50 g/l are used.

4. Process according to Claim 1, wherein part of the liquid phase containing solid constituents (8b) from the anaerobic fermentation and precipitation (A) is fed back to the anaerobic fermentation and precipitation (A) and the other part (8a) is subjected to a magnesium ammonium phosphate precipitation (MAP precipitation) (B).

5. Process according to Claim 1, wherein magnesium as magnesium salt, e.g. MgCl₂, Mg(OH)₂, MgO, or in pure form and phosphorus as H₃PO₄ and hydroxide ions as NaOH are fed to the MAP precipitation (B).

6. Process according to Claim 1, wherein a nanofiltration is carried out as filtration (C).

7. Process according to Claim 1, wherein air is fed as gas to the MAP reactor (B).

8. Process according to Claim 1, wherein the liquid phases containing solid constituents (7, 9, 18, 22) which are discharged from the process are used further as fertilizer and the liquid phase (4) discharged from the process after the reverse osmosis reaction (E) has drinking water quality and is used further as such.

9. Apparatus for treating waste products, consisting of at least an EGSB reactor (5) for anaerobic fermentation and precipitation (A) having at least feed conduits for the waste products (1.1) to be treated and discharge conduits for biogas (2) and the liquid phases containing solid constituents (9, 8a, 8b) which are formed and of a reactor located downstream in the process for MAP precipitation (11) (MAP reactor) (B) having a tube (13) arranged vertically in the MAP reactor (11), where the one tube end is arranged at the level of the feed conduits for the liquid phase containing solid constituents (8a) into the MAP reactor (11) and the other tube end is arranged up to a maximum of 0.5 m below the liquid level in the reactor (11), and having at least one feed conduit for liquid phase containing solid constituents (8a) coming from the EGSB reactor (5) for anaerobic fermentation and precipitation (A) and at least feed conduits for gases (12) and magnesium, in the form of ions or magnesium-containing compounds (14), and also phosphorus compounds (15) and hydroxide ions in the form of compounds (16) and at least discharge conduits for the liquid phases containing solid constituents (3, 17) formed in the MAP reactor (11), where the feed conduit for gases (12) is present at the level of the upper third of the tube (13) arranged in the MAP reactor (11), and of a filter device (23) which is arranged downstream in the process and has at least one feed conduit for liquid phase containing solid constituents (17) coming from the MAP reactor (11) and at least one discharge conduit for the retentate (18) formed in the filter device (23), which discharge conduit is either a feed conduit into the EGSB reactor (5) for anaerobic fermentation and precipitation (A) and/or a discharge conduit from the process, and at least one discharge conduit for the permeate (19) formed in the filter device (23), and of a device located downstream in the process for realizing an electrochemical oxidation (24) having at least one feed conduit for the permeate (19) coming from the filter device (23) and at least one discharge conduit each for the catholyte (20) and anolyte (21) formed, and of a device located downstream in the process for realizing a reverse osmosis reaction (25) having at least one discharge conduit each for the liquid phases containing solid constituents (22, 4) formed.

10. Apparatus according to Claim 9, wherein the EGSB reactor (5) for anaerobic fermentation and precipitation (A) consists of two reactors (5, 6) connected in series, where a feed conduit for the liquid phase containing solid constituents formed in the EGSB reactor (5) for anaerobic fermentation (A) into the reactor for precipitation (6) is present and the reactor for precipitation (6) has at least two discharge conduits for the liquid phase containing solid constituents (7, 8a, 8b) which is formed, and one of the discharge conduits for the liquid phase containing solid constituents (8a, 8b) is either entirely the feed conduit for the MAP reactor (11) or is simultaneously a feed conduit for the MAP reactor (11) and a feed conduit for the EGSB reactor (5) for anaerobic fermentation and precipitation (A).

11. Apparatus according to Claim 9, wherein the filter device (23) is a device for nanofiltration using ceramic filters.

## Revendications

1. Procédé de traitement de déchets, les déchets (1.1) ayant une teneur en acides organiques de 12 g/l maximum et une teneur en sel de 50 g/l maximum étant d'abord soumis à une fermentation anaérobie et à une précipitation (A) pour générer du biogaz (2), une partie de la phase liquide résultante pourvue de fractions solides (9) étant retirée du procédé et l'autre partie de la phase liquide résultante pourvue de fractions solides (8a) étant au moins partiellement soumise à une précipitation au phosphate de magnésium et d'ammonium (précipitation MAP) (B), pendant la précipitation MAP (B) au moins un gaz et du magnésium, sous forme d'ions ou de composés contenant du magnésium, et des composés du phosphore et des ions hydroxyde sous forme de composés étant amenés dans la phase liquide pourvue de fractions solides (8a) et un écoulement en boucle de la phase liquide pourvue de fractions solides (8a) étant réalisé pendant la précipitation MAP (B) grâce à l'amenée de gaz (12), puis une partie de la phase liquide pourvue de fractions solides (3), qui est générée lors de la précipitation MAP (B), étant retirée du procédé et l'autre partie de la phase liquide pourvue de matières solides (17), qui est générée lors de la précipitation MAP (B) étant amenée à un filtre (C), le rétentat (18) généré lors de la filtration (C) étant amené à la fermentation anaérobie (A) et/ou évacué du procédé et le perméat (19) étant ensuite amené à une oxydation électrochimique (D), puis l'anolyte (21) de l'oxydation (D) étant soumis à une réaction d'osmose inverse (E) et le catholyte (20) étant éliminé du procédé, toutes les phases liquides pourvues des fractions solides (7, 9, 18, 22) du procédé, qui sont évacuées du procédé, et la phase liquide (4) générée après la réaction d'osmose inverse (E) étant amenées à une utilisation ultérieure.

2. Procédé selon la revendication 1, dans lequel les déchets (1.1) utilisés sont des déchets de l'industrie alimentaire, de la transformation du petit-lait, tels que des liqueurs claires, de la transformation du sucre, mais également des flux d'eaux résiduaires concentrées provenant de la transformation du poisson ou du fromage ou de la production d'amidon.

3. Procédé selon la revendication 1, dans lequel les déchets (1.1) sont utilisés avec une proportion de 5 à 12 g/l d'acides organiques et des teneurs en sel de 30 à 50 g/l.

4. Procédé selon la revendication 1, dans lequel une partie de la phase liquide pourvue de fractions solides (8b) de la fermentation anaérobie et de la précipitation (A) est amenée de nouveau à la fermentation anaérobie et à la précipitation (A) et l'autre partie (8a) est soumise à une précipitation au phosphate d'ammonium et de magnésium (Précipitation MAP) (B).

5. Procédé selon la revendication 1, **caractérisé en ce que** du magnésium sous forme de sel de magnésium, tel que MgCl₂, Mg(OH)₂, MgO ou sous forme pure, et du phosphore sous forme de H₃PO₄ et des ions hydroxyde sous forme de NaOH sont amenés à la précipitation MAP (B).

6. Procédé selon la revendication 1, dans lequel la filtration (C) réalisée est une nanofiltration.

7. Procédé selon la revendication 1, dans lequel le gaz amené au réacteur MAP (B) est de l'air.

8. Procédé selon la revendication 1, dans lequel les phases liquides pourvues des fractions solides (7, 9, 18, 22), qui ont été évacuées du procédé, sont en outre utilisées comme engrais et la phase liquide (4) qui a été évacuée du procédé après la réaction d'osmose inverse (E) a une qualité d'eau potable et est réutilisée en tant que telle.

9. Dispositif de traitement de déchets, ledit dispositif comprenant au moins un réacteur EGSB (5) destiné à la fermentation anaérobie et à la précipitation (A) et comportant au moins des conduites d'alimentation destinées aux déchets à traiter (1.1) et des conduites d'évacuation destinées au biogaz (2) et aux phases liquides résultantes pourvues des fractions solides (9, 8a, 8b), et un réacteur destiné à la précipitation MAP (11) (réacteur MAP) (B) qui est monté en aval dans le déroulement du procédé et qui est pourvu d'un tube (13) disposé verticalement dans le réacteur MAP (11), une première extrémité de tube étant disposée au niveau des conduites d'alimentation de la phase liquide pourvue des fractions solides (8a) dans le réacteur MAP (11) et l'autre extrémité de tube étant disposée jusqu'à un maximum de 0,5 m au-dessous du niveau de liquide dans le réacteur (11), et au moins une conduite d'alimentation destinée à la phase liquide résultante pourvue des fractions solides (8a) qui provient du réacteur EGSB (5) destiné à la fermentation anaérobie et à la précipitation (A) et au moins des conduites d'alimentation destinées à des gaz (12) et au magnésium, sous forme d'ions ou de composés contenant du magnésium (14), et des composés du phosphore (15) et des ions hydroxyde sous forme de composés (16) et au moins des conduites d'évacuation destinées aux phases liquides pourvues de fractions solides (3, 17) qui sont générées dans le réacteur MAP (11), la conduite d'alimentation destinée à des gaz (12) étant présente au niveau du tiers supérieur du tube (13) disposé dans le réacteur MAP (11), et un dispositif de filtration (23) monté en aval dans le déroulement du procédé et comprenant au moins une conduite d'alimentation destinée à la phase liquide résultante pourvue des fractions solides (17) qui provient du réacteur MAP (11) et au moins une conduite d'évacuation qui est destinée au rétentat (18) généré dans le dispositif de filtration (23) et qui est une conduite d'alimentation du réacteur EGSB (5) destiné à la fermentation anaérobie et à la précipitation (A) et/ou une conduite d'évacuation du processus, et au moins une conduite d'évacuation destinée au perméat (19) généré dans le dispositif de filtration (23) et un dispositif monté en aval dans le déroulement du procédé et destiné à réaliser une oxydation électrochimique (24) et comprenant au moins une conduite d'alimentation destinée au perméat (19) généré par le dispositif de filtration (23) et au moins une conduite destinée au catholyte (20) et à l'anolyte (21) générés et un dispositif monté en aval dans le déroulement du procédé et destiné à réaliser une réaction d'osmose inverse (25) et comprenant au moins une conduite d'évacuation destinée aux phases liquides résultantes pourvues des fractions solides (22, 4).

10. Dispositif selon la revendication 9, dans lequel le réacteur EGSB (5) destiné à la fermentation anaérobie et à la précipitation (A) comprend deux réacteurs (5, 6) montés en série, une conduite d'alimentation destinée à la phase liquide pourvue des fractions solides qui est générée dans le réacteur EGSB (5) destiné à la fermentation anaérobie (A) étant présente dans le réacteur destiné à la précipitation (6) et le réacteur destiné à la précipitation (6) comportant au moins deux conduites d'évacuation destinées à la phase liquide pourvue des fractions solides (7, 8a, 8b), et l'une des conduites d'évacuation destinée à la phase liquide pourvue des fractions solides (8a, 8b) étant entièrement la conduite d'alimentation destinée au réacteur MAP (11) ou étant en même temps une conduite d'alimentation destinée au réacteur MAP (11) et une conduite d'alimentation destinée au réacteur EGSB (5) destiné à la fermentation anaérobie et à la précipitation (A).

11. Dispositif selon la revendication 9, dans lequel le dispositif de filtration (23) est un dispositif de nanofiltration utilisant des filtres céramiques.
